# EUROPÄISCHE PATENTSCHRIFT

(11) **EP 0 667 467 B1**
(45) Veröffentlichungstag und Bekanntmachung des Hinweises auf die Patenterteilung: **21.01.1998**
(21) Anmeldenummer: 94117514.3
(22) Anmeldetag: 07.11.1994
(51) Int. Cl.: F16F 15/126

(54) **Verfahren zur Herstellung eines eingepressten Torsionsschwingungsdämpfers**
Method for producing a pressed-in torsional vibration damper
Procédé de fabrication d'un amortisseur d'oscillations de torsion monté à force

(30) Priorität: 10.02.1994 DE 4404255
(43) Veröffentlichungstag der Anmeldung: 16.08.1995
(73) Patentinhaber: Firma Carl Freudenberg, 69469 Weinheim (DE)
(72) Erfinder: Schwerdt, Hans-Werner, D-69514 Laudenbach (DE); Lau, Helmut, Dr., D-79418 Schliengen (Mauchen) (DE)

(56) Entgegenhaltungen:
- DE-A- 2 041 126
- GB-A- 1 369 228
- US-A- 3 925 590
- US-A- 4 308 365
- US-A- 5 279 900

## Beschreibung

Die Erfindung befaßt sich mit einem Verfahren zur Herstellung eines eingepreßten Torsionsschwingungsdämpfers.

Insbesondere wird ein Verfahren beansprucht, welches sich auf die Verwendung eines nach-aktivierbaren Klebers bezieht, welcher den elastomeren Zwischenring einerseits am metallischen oder polymeren Nabenring und andererseits am metallischen Schwungring fixiert.

Eingepreßte Torsionsschwingungsdämpfer bestehen aus zwei konzentrisch mit Abstand zueinander angeordneten Metallringen und einem in den Ringspalt eingepreßten elastomeren Zwischenring, wobei Anlageflächen zwischen den metallenen und elastischen Bauteilen gebildet werden. Der elastomere Zwischenring verbindet den Schwungring mit dem konzentrisch dazu angeordneten Nabenring und dämpft die gegenseitigen Torsionsschwingungen der Metallringe im Betrieb. Demgemäß umfaßt die Erfindung auch analog aufgebaute, Torsionsbewegungen dämpfende, ringförmige Bauteile, wie Walzen, Ultrabuchsen und Gelenklager.

Der Einbau des ein radiales Übermaß aufweisenden Zwischenrings in den dafür vorgesehenen Ringspalt zwischen den Metallringen erfolgt mit einer Kraftanwendung (Einschuß) parallel zur Torsionsschwingungsachse, wobei der Zwischenring in den Spalt eingepreßt wird. Ein solcher Torsionsschwingungsdämpfer ist beispielsweise beschrieben in DE-OS 38 25 062.

Üblicherweise preßt der zur Verfügung stehende Ringspalt den Zwischenring beim Einpressen auf 60 % seiner radialen Ausgangsdicke zusammen. Dadurch entsteht eine definierte Steifigkeit des Elastomerrings und somit eine Eigenfrequenz des Feder-Masse-Systems im Torsionsschwingungsdämpfer, welche nicht gesenkt werden kann, ohne z.B. den Ringspalt zu vergrößern, was wegen vorgegebener Einbaumaße meist undurchführbar ist.

Versuche, diese Eigenfrequenzen nur durch eine weichere Federung, d.h. über einen geringeren radialen Einpreßdruck des Zwischenrings, zu senken, scheitern an dessen durch mangelnde Radialpreßkräfte unvollkommener Haftreibung an Naben- und Schwungring, insbesondere nach längerem Betrieb.

In ELASTOMERICS (Januar 1982), Seiten 21 bis 23, schlagen N. Hofmann und R. Riege eine diesbezügliche Gummi-Metall-Klebeverbindung vor, wobei die Gummiflächen des Zwischenrings mit halogenierten Chlorkohlenwasserstoffen vorgereinigt werden. Auch die Metalloberflächen werden durch Dampf und gegebenenfalls chemisch entfettet.

Danach werden die Anlageflächen der Metallringe und/oder des elastomeren Zwischenrings mit einem Klebstoffilm versehen, wobei ein Kleber verwendet wird, der während des Zusammenbaus des Schwingungsdämpfers trocken ist und anschließend durch Nachvulkanisation bei z.B. 250°F (121°C) und während 15 Minuten seine Klebefähigkeit erhält. Bei diesem Nachvulkanisieren müssen die zu verklebenden Teile unter radialem Preßdruck gehalten werden, welcher von der Shore-Härte des Elastomerringes abhängt.

In der Praxis führt dieses Verfahren jedoch erst ab 150°C und nach 30 Minuten zu befriedigenden Klebefestigkeiten.

In der Hitze nachbehandelbare, "post-vulkanisierbare" Kleber haben daher den Nachteil, daß durch die extreme Hitzebehandlung die geometrische Anordnung von Nabe, Elastomer und Schwungring sich verändern kann, so daß während der Verklebung eine Fixierung dieser Bauteile erforderlich ist. Diese Maßnahme und die Hitzebehandlung an sich führen zu einer Hemmung im Produktionsablauf.

GB-A-1 369 288 befaßt sich mit einer eine Drehbewegung übertragenden Kupplung für Lenksäulen. Die Kupplung besteht aus einem äußeren und einem inneren Metallelement, welche durch ein dazwischen liegendes Gummielement axial miteinander verbunden sind. Letzteres und das innere Metallelement weisen einen nicht kreisförmigen Querschnitt auf und sind durch Vulkanisation des Gummielements miteinander verbunden. Das Gummielement kann mit dem äußeren Metallelement durch einen halthärtenden Kleber auf Basis von Cyanacrylat verbunden werden. Dieser Klebertyp wird als nicht 100% verläßlich angesehen, insbesondere wenn eine Massenproduktion der Kupplung durchgeführt wird. Um diesen Nachteil zu umgehen, weist das Gummielement Vorsprünge auf, welche als Widerlager zu den metallischen Bauteilen dienen. Im unbelasteten Zustand ist eine Innenfläche des äußeren Bauteils axial von der gegenüberliegenden, korrespondierenden Fläche des Gummielements beabstandet.

Eine Aufgabe der vorliegenden Erfindung ist es, ein gattungsgemäßes Verfahren zur Herstellung eines eingepreßten Torsionsschwingungsdämpfers aufzuzeigen, wobei ohne Variation anderer Parameter, wie z.B. von Shore-Härte oder Ringspalt-Dimensionen, durch Verringerung der radialen Einpressung des Elastomerringes auf eine Dickenreduzierung von nur 20 % bis hinab zu 0 % (paßgenau) der ursprünglichen Dicke vor dem Einschießen, die Eigenfrequenz des Feder-Masse-Systems gesenkt, also eine weichere Federung erzielt werden kann. Dennoch soll dabei die klebende Gummi-Metall-Verbindung dauerhaft so stabil sein, daß keinerlei Verschiebung der Verbindungsflächen gegeneinander stattfindet. Der Kleber muß auf Gummi und Metall gleichermaßen haften.

Für Anwendungen bei solch geringen bis nicht vorhandenen Einpreßdrucken geeignete, trockenbare Kleber waren bisher zur Verwendung auf dem Gebiet des Zusammenfügens von Torsionsschwingungsdämpfer-Bauteilen nicht bekannt.

Eine weitere Aufgabe der Erfindung ist es, eine Aufheizung der Bauteile des Schwingungsdämpfers über 100°C während der Verklebung in jedem Fall zu vermeiden. Daher muß der Kleber seine Klebewirkung ohne eine Wärmezufuhr entfalten können, welche eine solche Aufheizung zur Folge hätte.

Die Erfindung schlägt nun ein Verfahren zur Herstellung eines eingepreßten Torsionsschwingungsdämpfers vor, bei dem man die Anlagefläche des elastomeren Zwischenrings mit Kleber beschichtet, den Zwischenring anschließend in den Ringspalt zwischen dem Naben- und dem Schwungring einschießt und danach den Kleber aktiviert. Dieses Verfahren ist dadurch gekennzeichnet, daß man kalthärtende oder katalytisch aktivierbare Kleber verwendet, die nach der Trocknung nichthaftend sind und mindestens einem der folgenden Systeme angehören:
1: Chlorkautschuk mit p-Dinitrosobenzol, Kupfer- oder Nickel-Katalysator und Isocyanat-Zusatz.
2: Katalysierte Einkomponenten-Epoxidharze, welche durch -onium-Salze von BF₄⁻, PF₆⁻, AsF₆⁻ oder SbF₆⁻, zweckmäßig beim Erwärmen auf 60 bis 90°C, selbständig vernetzen.
3: Durch zinnhaltige Katalysatoren, z.B. Zinnoctate, modifizierte Silikonkleber, welche kalthärtend und unter Wärmeeinwirkung bis 70°C aktivierbar sind.
4: Cyanacrylate, deren Polymerisation und Klebefähigkeit eingeleitet wird durch geringe Mengen eindiffundierten Wassers, welches sich im Elastomermaterial und auf der metallenen oder polymeren Nabe befindet sowie durch die Luftfeuchtigkeit zur Verfügung steht.
5: Polyacrylate, die mit katalytisch wirkenden Übergangsmetall-lonen, z.B. Cu oder Ni, welche sich von dem Material der Nabe oder dem Elastomermaterial lösen, beim Zusammenfügen der Bauteile einen vernetzten Klebefilm bilden.
6: Kalthärtende Zweikomponenten-Epoxidharze, welche zuerst gemischt und dann auf Klebeflächen aufgetragen werden oder welche getrennt auf einander gegenüberliegende Klebeflächen vor deren Zusammenfügen verbracht werden. Die Vernetzung erfolgt dabei von selbst nach einiger Zeit; sie kann jedoch zweckmäßigerweise bei Temperaturen bis maximal 90°C beschleunigt werden.
7: Kleber des Systems 5, zusammen mit einem Polyacrylat ohne Doppelbindungen und mit Styrol.
8: Kleber des Systems 7, mit Dibenzoylperoxid und Maleinsäureanhydrid.
9: Zweikomponenten-Acrylat-Kleber mit einer aminhaltigen und einer peroxidhaltigen Komponente.

Vorteilhafte Varianten der beanspruchten Kleber werden in den Unteransprüchen genannt.

Vor dem Auftragen des Klebers ist selbstverständlich zu beachten, daß die Klebeflächen sauber und fettfrei sind. Diesbezügliche Maßnahmen sind jedoch nicht Gegenstand der Erfindung und bereiten dem Fachmann keinerlei Schwierigkeiten.

Das Auftragen kann nach beliebigen Verfahren erfolgen, so durch Aufpinseln, Rollen, Sprühen, Eintauchen, wobei der Film eine zweckmäßige Schichtdicke von 5 bis 30 µm aufweist. Diese Schichtdicken liegen im bei Klebetechniken üblichen Rahmen und können ohne weiteres auf 1 µm bis 100 µm unter- bzw. überschritten werden, sofern die erhaltenen Verklebungen den anschließenden Belastungen der Bauteile noch genügen. Die anschließende Vernetzung, also die Aktivierung des Klebers im zusammengefügten Torsionsschwingungsdämpfer, erfolgt ohne zerstörende Hitzeeinwirkung. Sie kann lediglich durch geringe Wärmezufuhr beschleunigt werden. Je nach Klebertyp wird man feststellen, daß nach Lagerung bei Raumtemperatur über 24 Stunden oder nach durchschnittlich 5 Minuten und Wärmebeaufschlagung bis maximal 90°C trockene Oberflächen erzielt werden.

Bei leicht zu verklebenden Elastomeren, wie z.B. bei Nitril-Kautschuken, genügt es, allein die Klebeflächen des Zwischenringes mit Kleberfilm auszurüsten.

In den Fällen, in denen schwer zu verklebende Elastomere, wie z.B. Ethylen-Propylen-Dien-Terpolymere, vorliegen oder die Bauteile hohen Betriebstemperaturen bzw. hohen mechanischen Belastungen unterworfen werden sollen, ist es zweckmäßig, sowohl die elastomeren als auch die metallischen Anlageflächen mit einem Klebefilm zu belegen.

Der in der Einschußtechnik übliche Gebrauch reibungsmindernder, hochviskoser Additive zusätzlich zum Kleber ist auch bei den erfindungsgemäß verwendeten Klebern möglich und empfehlenswert. Diese Additive werden direkt vor dem Zusammenbau des Torsionsschwingungsdämpfers auf die miteinander in Berührung kommenden Flächen aufgetragen; sie erleichtern den zerstörungsfreien Einschuß des elastomeren Zwischenrings in den Ringspalt.

Es war nicht vorherzusehen, daß bei Verwendung der anspruchsgemäßen Kleber deren Klebewirkung so intensiv ist, daß, im Gegensatz zu post-vulkanisierbaren Klebern, Einpreßkräfte des Zwischenrings im Ringspalt bis zu Null erzielt werden können, d.h. der Zwischenring nur zu maximal 80 % seiner ursprünglichen radialen Dicke gestaucht werden muß oder diese Stauchung ganz entfallen kann. Somit ist es erstmals möglich, die Eigenfrequenz des Feder-Masse-Systems eines eingepreßten Torsionsschwingungsdämpfers allein dadurch zu senken, daß man die radiale Einpreßkraft, welche auf den elastomeren Zwischenring wirkt, so, gegebenenfalls bis auf Null, verringert, daß eine weiche elastomere Feder vorliegt. Dies muß nicht mit dem Nachteil einer relativen Verschiebung zwischen dem Elastomerring und den konzentrischen Metallringen erkauft werden, wie es bisher der Fall war, weil herkömmliche Klebertypen, auch nachaktivierbare, dann versagten.

Die erfindungsgemäß verwendeten Kleber liegen als hochviskose Flüssigkeiten oder als Feststoffe vor, die durch Zugabe von Lösungsmitteln oder Polymeren auf ihre Verarbeitungsviskosität eingestellt werden. Dabei können wie beim bisherigen Stand der Technik Füllstoffe, reaktive Verdünner, Amine und Peroxide zugesetzt werden. Auch Farb- und Korrosionsschutz-Additive beeinträchtigen nicht die beschriebene Aktivierbarkeit der Kleber.

Im folgenden wird beispielhaft die Verarbeitung der einzelnen Klebersysteme nach dem erfindungsgemäßen Verfahren beschrieben, wobei diese Ausführungen nicht einschränkend zu verstehen sind.

### Klebersysteme 1 und 3:

Zur Herstellung des Torsionsschwingungsdämpfers werden die Oberflächen von Nabe, Schwungring und Elastomerring im Klebebereich gereinigt. Anschließend werden die Klebebereiche von Nabe und Schwungring mit dem Klebersystem beschichtet. Darauf erfolgt der Einschuß, wonach auf Temperaturen von 60 bis 90°C erwärmt wird. Innerhalb einer Stunde ist der Klebeprozeß abgeschlossen.

### Klebersystem 2:

Nach der Beschichtung der wie oben gereinigten Flächen mit dem Kleber sind die Bauteile lagerfähig. Nach dem Einschießen zu einem beliebigen Zeitpunkt kann durch Erwärmung auf Temperaturen von 60 bis 80°C der Klebeprozeß innerhalb einer Stunde abgeschlossen werden.

### Klebersysteme 4 und 5:

Die wie beim Klebersystem 1 gereinigten Oberflächen werden mit dem Kleber beschichtet. Danach erfolgt der Einschuß, nach 2 Stunden bei Raumtemperatur ist die Klebereaktion abgeschlossen.

### Klebersysteme 6 und 7:

Die zwei Komponenten des Klebers werden vorgemischt und auf die wie beim Klebersystem 1 gereinigten Flächen aufgetragen. Sofort danach erfolgt der Einschuß. Die Teile können gelagert werden. Durch Erwärmung auf 80°C ist die Vernetzungsreaktion in einer Stunde abgeschlossen.

### Klebersystem 8:

Nach der beschriebenen Reinigung der zu verklebenden Oberflächen und dem sofort anschließenden Einschuß erfolgt die Klebereaktion bei Raumtemperatur innerhalb eines Tages. Durch Erwärmung auf 60 bis 80°C wird die Vernetzungsreaktion auf 1 bis 2 Stunden beschleunigt.

### Klebersystem 9:

Zur Herstellung des Torsionsschwingungsdämpfers werden die Oberflächen von Nabe, Schwungring und Elastomerring im Klebebereich gereinigt. Anschließend werden die Klebebereiche von Nabe und Schwungring mit einem peroxidhaltigen Kleber, die Klebeflächen des Elastomerrings mit einem aminhaltigen Kleber beschichtet. In diesem Zustand können die Teile gelagert werden.

Anschließend wird der Elastomerring in den Spalt zwischen Nabe und Schwungring eingepreßt. Die Vernetzungsreaktion, bei der das Amin zu dem Peroxid diffundiert und dessen Zersetzung einleitet, ist bei 70°C nach wenigen Minuten abgeschlossen.

## Patentansprüche

1. Verfahren zur Herstellung eines eingepreßten Torsionsschwingungsdämpfers, bestehend aus zwei konzentrisch mit Abstand zueinander angeordneten Metallringen und einem in den Ringspalt eingepreßten elastomeren Zwischenring, wobei Anlageflächen zwischen den metallenen und elastischen Bauteilen gebildet werden, und bei dem man die Anlageflächen der Metallringe und/oder des elastomeren Zwischenringes mit einem Kleber beschichtet, den Zwischenring dann in den Ringspalt zwischen dem Naben- und dem Schwungring einschießt und anschließend durch das Zusammenfügen der den Torsionsschwingungsdämpfer bildenden Teile den Kleber aktiviert, dadurch gekennzeichnet, daß man kalthärtende oder katalytisch aktivierbare Kleber verwendet, die nach der Trocknung zunächst nichthaftend sind und mindestens einem der folgenden Systeme angehören:
- Chlorkautschuk mit p-Dinitrosobenzol, Kupfer- oder Nickel-Katalysator und Isocyanat-Zusatz,
- katalysierte Einkomponenten-Epoxidharze, welche durch -onium-Salze von BF₄⁻, PF₆⁻, AsF₆⁻ oder SbF₆⁻, selbständig vernetzen,
- durch zinnhaltige Katalysatoren, z.B. Zinnoctate, modifizierte Silikonkleber, welche kalthärtend und unter Wärmeeinwirkung von 70°C aktivierbar sind,
- Cyanacrylate,
- Polyacrylate, die mit katalytisch wirkenden Übergangsmetall-lonen beim Zusammenfügen der Bauteile einen vernetzten Klebefilm bilden,
- kalthärtenden Zweikomponenten-Epoxidharze,
- Polyacrylate, die mit katalytisch wirkenden Übergangsmetall-lonen beim Zusammenfügen der Bauteile einen vernetzten Klebefilm bilden, zusammen mit einem Polyacrylat ohne Doppelbindungen und mit Styrol,
- Polyacrylate, die mit katalytisch wirkenden Übergangsmetall-lonen beim Zusammenfügen der Bauteile einen vernetzten Klebefilm bilden, zusammen mit einem Polyacrylat ohne Doppelbindungen und mit Styrol, und mit Dibenzoylperoxid und Maleinsäureanhydrid,
- Zweikomponenten-Acrylat-Kleber mit einer aminhaltigen und einer peroxidhaltigen Komponente,
und daß man diese Kleber nach dem Auftragen und dem Zusammenfügen der Bauteile an der Luft selbständig sich vernetzen läßt, gegebenenfalls beschleunigt durch geringe zusätzliche Wärmeeinwirkung unter 100°C.

2. Verwendung eines Klebers bei dem Verfahren nach Anspruch 1, bestehend aus einem halogenhaltigen Polymeren, das zumindest zwei Nitrosogruppen und/oder einen während seiner Aktivierung Nitrosogruppen bildenden Vernetzer sowie katalytisch wirksame Metalle und Isocyanat enthält.

3. Verwendung eines Klebers bei dem Verfahren nach Anspruch 1 oder 2, wobei der Kleber ein Gemisch aus mindestens 2 Systemen gemäß Anspruch 1 enthält.

4. Verwendung eines Klebers bei dem Verfahren nach Anspruch 1 bis 3, wobei der Kleber gelöste oder dispergierte Polymere sowie wahlweise reaktive Verdünner als zusätzliche Vernetzungsmittel enthält.

## Claims

1. A process for producing a pressed-in torsional vibration damper consisting of two metal rings arranged concentrically at a distance from one another and of an elastomeric intermediate ring pressed into the ring gap, bearing surfaces being formed between the metal and elastic components, and in which the bearing surfaces of the metal rings and/or of the elastomeric intermediate ring are coated with an adhesive, the intermediate ring is then fired into the ring gap between the hub ring and the fly-ring, and the adhesive is subsequently activated by the joining of the parts which form the torsional vibration damper, characterized in that cold-curing or catalytically activatable adhesives are used which after drying are initially nonadhering and which belong to at least one of the following systems:
- chlorinated rubber with p-dinitrosobenzene, copper or nickel catalyst, and added isocyanate,
- catalysed one-component epoxy resins which crosslink automatically by means of onium salts of BF₄⁻, PF₆⁻, AsF₆⁻ or SbF₆⁻,
- silicone adhesives which are modified by tin-containing catalysts, for example tin octoates, and which are cold-curing and can be activated under the action of heat at 70°C,
- cyanoacrylates,
- polyacrylates which form a crosslinked adhesive film with catalytically active transition metal ions when the components are joined,
- cold-curing two-component epoxy resins,
- polyacrylates which form a crosslinked adhesive film with catalytically active transition metal ions when the components are joined, together with a polyacrylate which has no double bonds and with styrene,
- polyacrylates which form a crosslinked adhesive film with catalytically active transition metal ions when the components are joined, together with a polyacrylate which has no double bonds and with styrene, and with dibenzoyl peroxide and maleic anhydride,
- two-component acrylate adhesives having an amine-containing and a peroxide-containing component,
and in that these adhesives, following application and the joining of the components, are left to crosslink automatically in the air, if desired with acceleration by slight additional action of heat below 100°C.

2. The use in the process according to claim 1 of an adhesive consisting of a halogen-containing polymer which contains at least two nitroso groups and/or a crosslinker which forms nitroso groups in the course of its activation, and also catalytically active metals and isocyanate.

3. The use in the process according to claim 1 or 2 of an adhesive which comprises a mixture of at least two systems according to claim 1.

4. The use in the process according to any of claims 1 to 3 of an adhesive which comprises dissolved or dispersed polymers and, optionally, reactive diluents as additional crosslinking agents.

## Revendications

1. Procédé de fabrication d'un amortisseur d'oscillations de torsion monté en force, composé de deux anneaux métalliques disposés ensemble de façon concentrique à une certaine distance et d'un anneau intermédiaire élastomère monté en force dans la fente annulaire, les surfaces de contact entres les pièces détachées métalliques et élastiques étant formées, et dans lequel on enduit les surfaces de contact des anneaux métalliques et / ou de l'anneau intermédiaire élastomère d'une colle, on insère ensuite l'anneau intermédiaire dans la fente annulaire entre la frette de roue et le volant et, ensuite, on active la colle en assemblant les pièces formant l'amortisseur d'oscillations de torsion, caractérisé en ce que l'on utilise des colles durcissant à froid ou pouvant être activées de façon catalytique, qui après le séchage sont d'abord non-adhérentes et appartiennent au moins à l'un des systèmes suivants :
- caoutchouc chloré avec p-dinitrosobenzène, catalyseur de cuivre ou de nickel et addition d'isocyanate,
- résines époxy à une composante catalysées, lesquelles se réticulent spontanément grâce à des sels à radical onium de BF4-, PF6-, AsF6- ou SbF6-,
- colles au silicone modifiées par des catalyseurs contenant de l'étain, par exemple des octoates stanneux, qui durcissent à froid et peuvent être activées par effet thermique de 70°C,
- cyanoacrylates,
- polyacrylates qui, avec des ions de métal transitoire agissant de façon catalytique, forment une pellicule adhésive réticulée lors de l'assemblage des pièces détachées,
- résines époxy à deux composantes durcissant à froid,
- polyacrylates qui, avec des ions de métal transitoire agissant de façon catalytique, forment une pellicule adhésive réticulée lors de l'assemblage des pièces détachées, conjointement avec un polyacrylate sans doubles liaisons et avec du styrène,
- polyacrylates qui, avec des ions de métal transitoire agissant de façon catalytique, forment une pellicule adhésive réticulée lors de l'assemblage des pièces détachées, conjointement avec un polyacrylate sans doubles liaisons et avec du styrène, et avec du peroxyde dibenzoïque et de l'anhydride d'acide maléique,
- colle d'acrylate à deux composantes avec une composante à teneur en amine et une composante à teneur en peroxyde
et en ce que l'on laisse ces colles se réticuler automatiquement à l'air après l'application et l'assemblage des pièces détachées, réticulation accélérée le cas échéant par un léger effet thermique supplémentaire inférieur à 100°C.

2. Utilisation d'une colle dans le procédé selon la revendication 1, composée d'un polymère halogéné, qui contient au moins deux groupes nitroso et/ou un réticulant, formant des groupes nitroso pendant son activation, ainsi que des métaux agissant de façon catalytique et un isocyanate.

3. Utilisation d'une colle dans le procédé selon l'une des revendications 1 ou 2, la colle contenant un mélange d'au moins 2 systèmes selon la revendication 1.

4. Utilisation d'une colle dans le procédé selon l'une des revendications 1 à 3, la colle contenant des polymères dissous ou dispersés ainsi que des diluants facultativement réactifs comme agents de réticulation supplémentaires.
